# EUROPÄISCHE PATENTSCHRIFT

(11) **EP 1 773 467 B1**
(45) Veröffentlichungstag und Bekanntmachung des Hinweises auf die Patenterteilung: **03.12.2008**
(21) Anmeldenummer: 05783501.9
(22) Anmeldetag: 03.08.2005
(51) Int. Cl.: B01D 46/12

(54) **FILTERPLATTE FÜR EINEN PARTIKELFILTER**
FILTER PLATE FOR A PARTICLE FILTER
PLAQUE FILTRANTE POUR FILTRE À PARTICULES

(30) Priorität: 04.08.2004 DE 102004037706
(43) Veröffentlichungstag der Anmeldung: 18.04.2007
(73) Patentinhaber: Daimler AG, 70327 Stuttgart (DE)
(72) Erfinder: FELDER, Hubert, 59439 Holzwickede (DE); KOHBERG, Carsten, 44539 Dortmund (DE)
(86) Internationale Anmeldenummer: PCT/EP2005/008398
(87) Internationale Veröffentlichungsnummer: WO 2006/015778

(56) Entgegenhaltungen:
- DE-A1- 4 234 930
- DE-A1- 10 128 938
- DE-U1-9202004 006 74
- US-A- 5 215 724

## Beschreibung

Die Erfindung betrifft eine Filterplatte für einen zur Abscheidung von Partikeln aus einem Abgasstrom einer Brennkraftmaschine dienenden Partikelfilter nach der im Oberbegriff von Anspruch 1 näher definierten Art. Des weiteren betrifft die Erfindung einen Partikelfilter zur Abscheidung von Partikeln aus einem Abgasstrom einer Brennkraftmaschine.

Aus der DE 42 34 930 A1 ist ein Filter zum Abscheiden von Verunreinigungen aus Abgasen bekannt, der einen Filterkörper mit einer Vielzahl von aus gesintertem Metallpulver bestehenden Filterplatten aufweist, die so angeordnet sind, dass sie eine Vielzahl von nebeneinander liegenden Strömungskanälen bilden. Die einzelnen Filterplatten sind wellenförmig geprägt und werden in Längsrichtung bzw. in axialer Richtung durchströmt. Diese Wellenform der Filterplatten führt zu jeweils gegeneinander abgegrenzten Längskanälen, die sich sehr schnell mit Asche verstopfen und somit die Wirkung des Filters beeinträchtigen können. Des weiteren ergibt sich durch die derart ausgeprägten Kanäle eine sehr stark gerichtete Strömung, die eine Verteilung über die Ebene der Filterplatten verhindert und so zu einem erhöhten Abgasgegendruck führt. Ein weiterer Nachteil der bekannten Filterplatten liegt in ihrer geringen Steifigkeit, die die Handhabung derselben zum Teil erheblich erschwert und ihre Dauerhaltbarkeit beeinträchtigen kann.

Einen weiteren Partikelfilter beschreibt die WO 02/102494 A1. Dabei sind um den Umfang einer zentralen Bohrung sternförmig mehrere Filtertaschen angeordnet, die einen dreieckigen Querschnitt aufweisen und in die ein Distanzelement eingesetzt ist, welches eine Verformung der Filtertaschen durch den Abgasdruck verhindern soll. Dieses auch als "spacer" bezeichnete Distanzelement ist jedoch ein zusätzliches Bauteil, welches einen zusätzlichen Aufwand bei der Fertigung des Partikelfilters darstellt. Des weiteren muss bei der Auslegung des Distanzelements darauf geachtet werden, dass dieses kein Hindernis für den Abgasstrom darstellt, da es ansonsten eine Erhöhung des Abgasgegendrucks verursachen würde.

Es ist Aufgabe der vorliegenden Erfindung, eine Filterplatte für einen Partikelfilter zu schaffen, die eine ausreichende Steifigkeit aufweist und sich, wenn sie mit einer weiteren Filterplatte einen Ein- oder Ausströmkanal bildet, durch den Abgasdruck nicht verformen lässt. Des weiteren sollte die Gestaltung der Filterplatte ein möglichst geringes Hindernis für den Abgasstrom darstellen.

Diese Aufgabe wird durch eine Filterplatte mit den Merkmalen des Anspruchs 1 gelöst.

Durch die in die erfindungsgemäße Filterplatte integrierten, linienförmigen Vertiefungen und Erhebungen wird eine Verbesserung der Steifigkeit der einzelnen Filterplatte erreicht, so dass sich eine einfachere Handhabung derselben bei nachfolgenden Bearbeitungsschritten und auch eine geringere Neigung, sich unter Druck zu verformen, ergibt.

Wenn zur Bildung eines Partikelfilters zwei erfindungsgemäße Filterplatten zu einem Ein- oder Ausströmkanal bzw. einer Filtertasche zusammengefügt werden, so stützt sich jede einzelne Vertiefung bzw. Erhebung an der Vertiefung bzw. Erhebung der benachbarten Filterplatte ab, so dass auch die Steifigkeit der einzelnen Kanäle erheblich verbessert werden kann. Die Linienform der Vertiefungen bzw. Erhebungen stellt hierbei sicher, dass auch bei großzügigeren Toleranzen die Vertiefungen und Erhebungen stets an entsprechenden Kreuzungspunkten auf ihrem jeweiligen Gegenstück zu liegen kommen, sodass ein Ineinanderfallen zweier benachbarter Filterplatten verhindert wird und ein konstanter Abstand derselben und damit ein Durchströmen des Abgases gewährleistet ist. Bei einer Beibehaltung der üblichen Toleranzen ist mit einer sehr viel höheren Genauigkeit eines aus mehreren erfindungsgemäßen Filterplatten bestehenden Filterblocks zu rechnen, was die Montage desselben erheblich vereinfacht.

Aufgrund der Tatsache, dass zumindest zwischen zwei aufeinanderfolgenden Vertiefungen oder Erhebungen ein Abschnitt des ebenen Flächenbereichs verbleibt, ist stets gewährleistet, dass sich der Abgasstrom flächig über die Filterplatte und somit in den Ein- bzw. Ausströmkanälen verteilen kann, so dass der mit Hilfe der erfindungsgemäßen Filterplatten gebildete Partikelfilter einen sehr geringen Abgasgegendruck erzeugt.

Des weiteren ist es vorteilhafterweise möglich, die erfindungsgemäßen linienförmigen Vertiefungen und Erhebungen mit einer geringen Streckung in das Material der Filterplatte einzubringen, wodurch die einzelnen Maschen des Trägermaterials nur gering belastet und das Filtermaterial durch die Umformung nicht beschädigt wird.

Wenn in einer vorteilhaften Weiterbildung der Erfindung vorgesehen ist, dass sich die linienförmigen Vertiefungen und Erhebungen in Wellenform über den Flächenbereich erstrecken, so ist zum einen eine sehr hohe Steifigkeit der Filterplatte und zum anderen eine sehr gute und gleichmäßige Durchströmung einer durch dieselbe gebildeten Filtertasche gewährleistet.

Eine besonders hohe Anzahl an Kreuzungspunkten der Vertiefungen bzw. Erhebungen von benachbarten Filterplatten ergibt sich, wenn sich die linienförmigen Vertiefungen und Erhebungen durchlaufend über den Flächenbereich erstrecken.

Ein Partikelfilter zur Abscheidung von Partikeln aus einem Abgasstrom einer Brennkraftmaschine mit mehreren im wesentlichen parallel zueinander angeordneten Filterplatten ist in Anspruch 11 angegeben.

Weitere vorteilhafte Ausgestaltungen und Weiterbildungen der Erfindung ergeben sich aus den restlichen Unteransprüchen. Nachfolgend sind Ausführungsbeispiele der Erfindung anhand der Zeichnung prinzipmäßig dargestellt.

Dabei zeigen:
- Fig. 1: eine Draufsicht auf eine erste Ausführungsform der erfindungsgemäßen Filterplatte;
- Fig. 2: einen Schnitt nach der Linie II-II aus Fig. 1;
- Fig. 3: einen Schnitt nach der Linie III-III aus Fig. 1;
- Fig. 4: eine Anordnung mehrerer Filterplatten aus Fig. 1 zu einem Filterkörper;
- Fig. 5: eine Anordnung mehrerer Filterplatten in einer alternativen Ausführungsform;
- Fig. 6: eine Draufsicht auf eine zweite Ausführungsform der erfindungsgemäßen Filterplatte;
- Fig. 7: eine Draufsicht auf eine dritte Ausführungsform der erfindungsgemäßen Filterplatte;
- Fig. 8: ein Schnitt nach der Linie VIII-VIII aus Fig. 7;
- Fig. 9: eine Draufsicht auf eine vierte Ausführungsform der erfindungsgemäßen Filterplatte; und
- Fig. 10: eine Draufsicht auf eine fünfte Ausführungsform der erfindungsgemäßen Filterplatte.

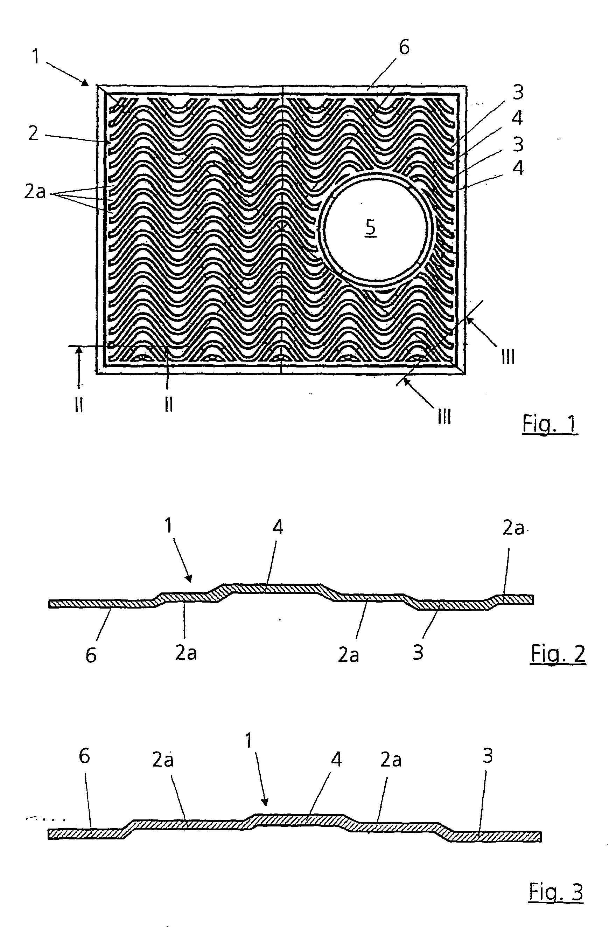

Fig. 1 zeigt eine Filterplatte 1, welche zur Bildung eines in seiner Gesamtheit nicht dargestellten, zur Abscheidung von Partikeln aus einem Abgasstrom einer Brennkraftmaschine dienenden Partikelfilters verwendet wird. Der Einsatzort, vorzugsweise innerhalb einer Abgasanlage der Brennkraftmaschine, und die Wirkungsweise eines derartigen Partikelfilters ist prinzipiell in der DE 42 34 930 A1 beschrieben, weshalb nachfolgend nicht näher darauf eingegangen wird.

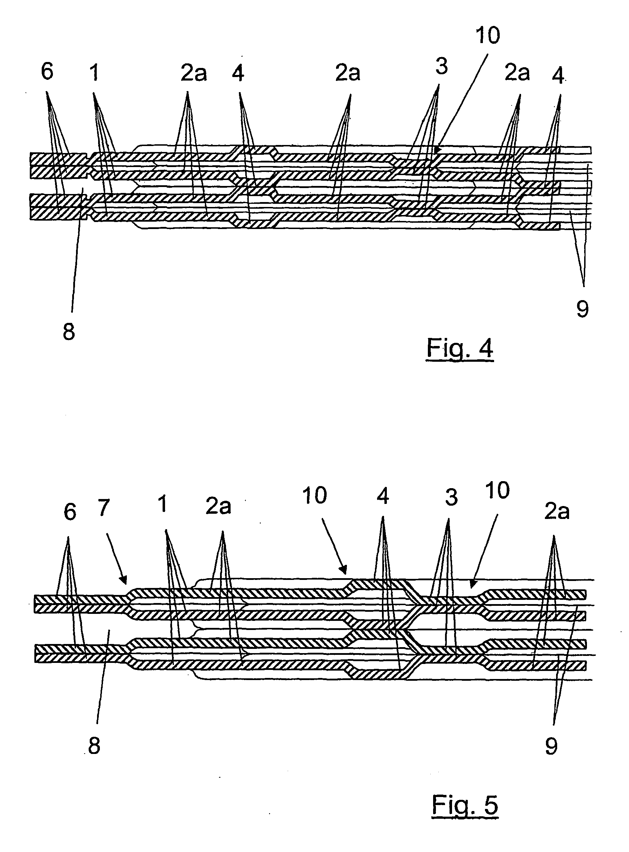

Die Filterplatte 1 besteht aus einem mit Sintermetallpulver beschichteten, gasdurchlässigen Trägermaterial und weist einen sich im wesentlichen in einer Ebene, nämlich im vorliegenden Fall in der Bildebene, erstreckenden Flächenbereich 2 auf. Um bei der Anordnung zweier derartiger Filterplatten 1 übereinander, wie in Fig. 4 dargestellt, einen Abstand der Filterplatten 1 voneinander herzustellen, ist der Flächenbereich 2 der Filterplatte 1 mit sich abwechselnden, linienförmigen Vertiefungen 3 und Erhebungen 4 versehen. Zumindest zwischen zwei aufeinanderfolgenden Vertiefungen 3 oder Erhebungen 4 verbleibt jedoch stets ein Abschnitt 2a des ebenen Flächenbereichs 2. In diesem Zusammenhang sollte klargestellt werden, dass je nach Betrachtungsweise die Vertiefungen 3 auf der gegenüberliegenden Seite der Filterplatte 1 eine Erhebung 4 darstellen und umgekehrt.

Bei der in Fig. 1 dargestellten Ausführungsform der Filterplatte 1 sind die linienförmigen Vertiefungen 3 und die linienförmigen Erhebungen 4 in Wellenform ausgeführt und erstrecken sich durchlaufend über den gesamten Flächenbereich 2. Eine Ausnahme hiervon bildet lediglich eine Bohrung 5, durch die der über den gesamten Rand 6 der Filterplatte 1 einströmende Abgasstrom von der Filterplatte 1 abströmt. Um für jede Größe der Filterplatte 1 eine bezüglich Festigkeit und strömungsgünstiger Ausführung geeignete Anordnung der wellenförmigen Vertiefungen 3 und Erhebungen 4 zu erreichen, kann die Amplitude und die Teilung derselben beispielsweise mittels FEM-Methoden berechnet werden. Dies gilt selbstverständlich auch für die weiteren, nachfolgend beschriebenen Ausführungsformen.

Die relative Anordnung der Vertiefungen 3 und der Erhebungen 4 zu den Abschnitten 2a des ebenen Flächenbereichs 2 ist in den Figuren 2 und 3 deutlicher zu erkennen. Daraus geht hervor, dass der Rand 6 auf einer Höhe mit den Vertiefungen 3 liegt und dass zwischen jeder Vertiefung 3 und der benachbarten Erhebung 4 ein Abschnitt 2a des ebenen Flächenbereichs 2 vorgesehen ist. Dasselbe gilt für Fig. 3, welche lediglich einen an einer anderen Stelle genommenen Schnitt durch die Filterplatte 1 zeigt.

In Fig. 4 ist ein Teil eines Filterkörpers 7 dargestellt, welcher durch eine parallele Aufeinanderschichtung einzelner Filterplatten 1 gebildet wird und gemeinsam mit weiteren bekannten und daher nicht dargestellten Bauteilen den Partikelfilter bildet. Hierdurch ergeben sich abwechselnde, auch als Filtertaschen bezeichnete Einströmkanäle 8 und Ausströmkanäle 9, wobei durch den Übertritt des Abgasstroms von einem der Einströmkanäle 8 durch die Filterplatte 1 in einen der Ausströmkanäle 9 Partikel, insbesondere Rußpartikel, aus dem Abgasstrom abgeschieden werden. Um dem Abgasstrom ein Einströmen zwischen die Filterplatten 1 zu ermöglichen und gleichzeitig das Abströmen nur durch die Bohrung 5 zuzulassen, sind die Ausströmkanäle 9 an den Rändern 6 der Filterplatten 1 miteinander verbunden. Diese Verbindung kann vorzugsweise durch eine Verschweißung vorgenommen werden, beispielsweise mit dem an sich bekannten WIG-Schweißverfahren. Die in Fig. 4 dargestellten Filterplatten 1 entsprechen im wesentlichen denjenigen gemäß Fig. 1, 2 und 3, so dass zwischen jeder der linienförmigen Vertiefung 3 und der benachbarten linienförmigen Erhebung 4 ein Abschnitt 2a des ebenen Flächenbereichs 2 verbleibt. Es ist erkennbar, dass sich jeweils die Erhebungen 4 der benachbarten Filterplatten 1, die die Einströmkanäle 8 bilden, und die Vertiefungen 3 derjenigen Filterplatten 1, die die Ausströmkanäle 9 bilden, an Kreuzungspunkten 10 gegenseitig berühren. Bezüglich einer großen Anzahl an Kreuzungspunkten 10 hat es sich als besonders geeignet herausgestellt, wenn zwei benachbarte Filterplatten 1 spiegelverkehrt zueinander ausgebildet sind.

Im Gegensatz dazu ist bei dem Filterkörper 7 gemäß Fig. 5 vorgesehen, dass sich eine linienförmige Vertiefung 3 unmittelbar an eine linienförmige Erhebung 4 anschließt. Um dennoch eine ausreichende Verteilung des Abgasstroms über die Filterplatten 1 zu ermöglichen, schließt sich sowohl an jede linienförmige Vertiefung 3 als auch an jede linienförmige Erhebung 4 ein Abschnitt 2a des ebenen Flächenbereichs 2 an.

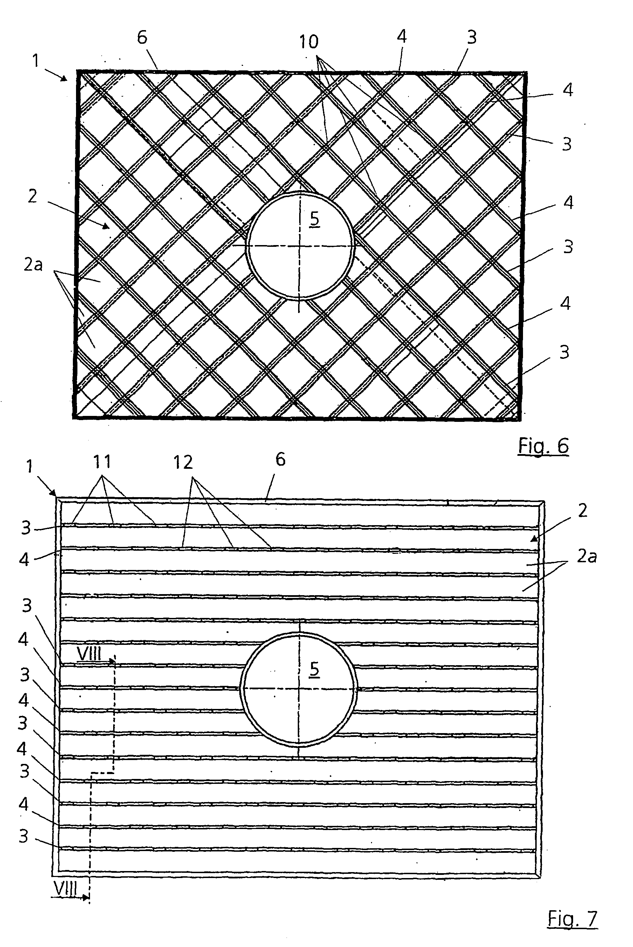

In Fig. 6 ist eine zweite Ausführungsform der Filterplatte 1 dargestellt, deren linienförmige Vertiefungen 3 und Erhebungen 4 sich diagonal über den Flächenbereich 2 erstrecken. Die Darstellung gemäß Fig. 6 zeigt zwei übereinander angeordnete Filterplatten 1, so dass die Kreuzungspunkte 10 zwischen den Vertiefungen 3 zweier benachbarter Filterplatten 1 und der Erhebungen 4 zweier benachbarter Filterplatten 1 dargestellt sind. Selbstverständlich können sich bei zwei nebeneinander angeordneten Filterplatten 1 jeweils entweder nur die Vertiefungen 3 oder nur die Erhebungen 4 miteinander kreuzen bzw. berühren.

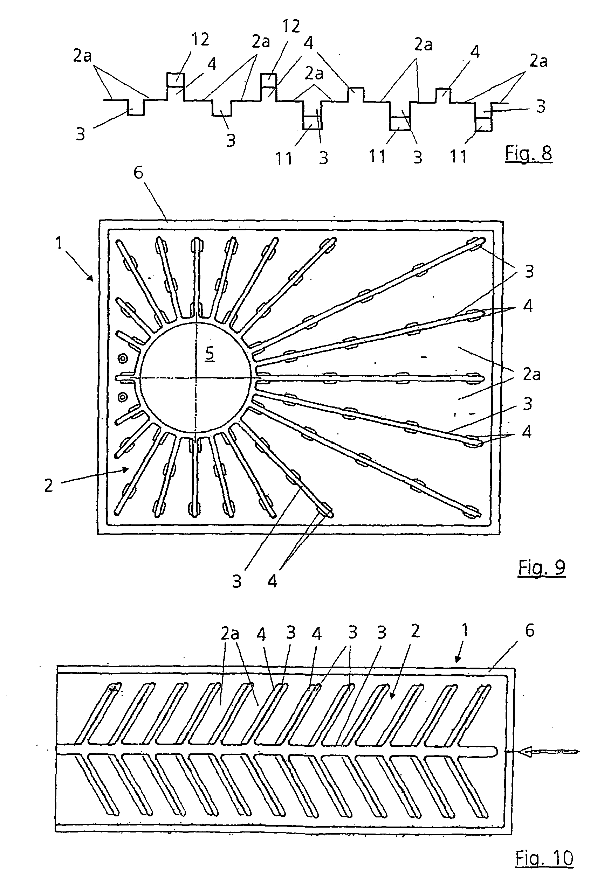

Eine weitere Ausführungsform der Filterplatte 1 ist in Fig. 7 dargestellt. Hierbei erstrecken sich die linienförmigen Vertiefungen 3 und die linienförmigen Erhebungen 4 in Längsrichtung parallel zu den Längsrändern 6 über die Filterplatte.1. Um zu verhindern, dass sich in den mit zwei derartigen Filterplatten 1 gebildeten Filtertaschen Strömungskanäle bilden, sind die linienförmigen Vertiefungen 3 mit mehreren punktförmigen Vertiefungen 11 und die linienförmigen Erhebungen 4 mit mehreren punktförmigen Erhebungen 12 versehen, die dann die jeweiligen Kreuzungspunkte 10 mit der benachbarten Filterplatte 1 bilden. Die Vertiefungen 3 bzw. Erhebungen 4 zweier Filterplatten 1 können dabei parallel oder gekreuzt aufeinandergelegt werden. In dem Schnitt gemäß Fig. 8 ist die Ausbildung der punktförmigen Vertiefungen 11 und der punktförmigen Erhebungen 12 deutlicher zu erkennen.

Bei der Ausführungsform der Filterplatte 1 gemäß Fig. 9 verlaufen die linienförmigen Vertiefungen 3 sternförmig in Richtung der Bohrung 5 sowie kreisförmig um die Bohrung 5. Auf diese Weise soll dem die Ausströmkanäle 9 durchströmenden Reinluftstrom ein vergrößerter Querschnitt zum Abströmen zur Verfügung gestellt werden, um den Abgasgegendruck sowie eventuelle Verwirbelungen zu verringern, wobei hierdurch in gewissem Maße der Querschnitt der Einströmkanäle 8 verringert wird. Dies bedeutet, dass die Vertiefungen 3 den Ausströmkanälen 9 zugeordnet sind und in den Einströmkanälen 8 entsprechende Erhebungen darstellen. Entlang der Vertiefungen 3 sind jeweils Erhebungen 4 vorgesehen, um den prinzipiellen Effekt der gegenseitigen Abstützung der Filterplatten 1 zu erhalten.

Eine ähnliche Wirkung bezüglich einer schnellen Abströmung der Abgase aus den Ausströmkanälen 9 wird durch die in Fig. 10 dargestellte Ausführungsform der Filterplatte 1 erreicht. Hierbei ist die linienförmige Vertiefung 3 der Filterplatte 1 fischgrätartig ausgeführt, so dass der in die Ausströmkanäle 9 eindringende Abgasstrom durch die einzelnen, die Äste bildenden Vertiefungen zu der mittleren Vertiefung gelangen und von dort abströmen kann. Auch hier sind der Vertiefung 3 jeweilige Erhebungen 4 zugeordnet. Diese Ausführungsform ist insbesondere für sehr lange Filterplatten 1 geeignet.

## Patentansprüche

1. Filterplatte für einen zur Abscheidung von Partikeln aus einem Abgasstrom einer Brennkraftmaschine dienenden Partikelfilter, welche aus einem mit Sintermetallpulver beschichteten, gasdurchlässigen Trägermaterial besteht und einen sich im wesentlichen in einer Ebene erstreckenden Flächenbereich aufweist,
**dadurch gekennzeichnet,**
**dass** der Flächenbereich (2) mit sich abwechselnden linienförmigen Vertiefungen (3) und Erhebungen (4) versehen ist, wobei zumindest zwischen zwei aufeinanderfolgenden Vertiefungen (3) oder Erhebungen (4) ein Abschnitt (2a) des ebenen Flächenbereichs (2) verbleibt.

2. Filterplatte nach Anspruch 1,
**dadurch gekennzeichnet,**
**dass** sich die linienförmigen Vertiefungen (3) und Erhebungen (4) in Wellenform über den Flächenbereich (2) erstrecken.

3. Filterplatte nach Anspruch 1,
**dadurch gekennzeichnet,**
**dass** sich die linienförmigen Vertiefungen (3) und Erhebungen (4) diagonal über den Flächenbereich (2) erstrecken.

4. Filterplatte nach Anspruch 1, 2 oder 3,
**dadurch gekennzeichnet,**
**dass** sich die linienförmigen Vertiefungen (3) und Erhebungen (4) durchlaufend über den Flächenbereich (2) erstrecken.

5. Filterplatte nach Anspruch 1,
**dadurch gekennzeichnet,**
**dass** sich die linienförmigen Vertiefungen (3) und Erhebungen (4) sternförmig über den Flächenbereich (s) erstrecken.

6. Filterplatte nach Anspruch 1,
**dadurch gekennzeichnet,**
**dass** sich die linienförmigen Vertiefungen (3) und Erhebungen (4) fischgrätartig über den Flächenbereich (2) erstrecken.

7. Filterplatte nach einem der Ansprüche 1 bis 6,
**dadurch gekennzeichnet,**
**dass** der Rand (6) des Flächenbereichs (2) auf einer Höhe mit den linienförmigen Vertiefungen (3) oder Erhebungen (4) liegt.

8. Filterplatte nach einem der Ansprüche 1 bis 7,
**dadurch gekennzeichnet,**
**dass** die linienförmigen Vertiefungen (3) mit zusätzlichen punktförmigen Vertiefungen (11) und die linienförmigen Erhebungen (4) mit zusätzlichen punktförmigen Erhebungen (12) versehen sind.

9. Filterplatte nach einem der Ansprüche 1 bis 8,
**dadurch gekennzeichnet,**
**dass** zwischen jeder der linienförmigen Vertiefungen (3) und der benachbarten linienförmigen Erhebung (4) ein Abschnitt (2a) des ebenen Flächenbereichs (2) verbleibt.

10. Filterplatte nach einem der Ansprüche 1 bis 8,
**dadurch gekennzeichnet,**
**dass** sich eine linienförmigen Vertiefung (3) unmittelbar an eine linienförmigen Erhebung (4) anschließt, wobei sich sowohl an die linienförmige Vertiefung (3) als auch an die linienförmige Erhebung (4) ein Abschnitt (2a) des ebenen Flächenbereichs (2) anschließt.

11. Partikelfilter zur Abscheidung von Partikeln aus einem Abgasstrom einer Brennkraftmaschine, mit mehreren im wesentlichen parallel zueinander angeordnete Filterplatten (1) gemäß einem der Ansprüche 1 bis 10, welche abwechselnd Einströmkanäle (8) und Ausströmkanäle (9) für den Abgasstrom bilden.

12. Partikelfilter nach Anspruch 11,
**dadurch gekennzeichnet,**
**dass** zwei benachbarte Filterplatten (1) spiegelverkehrt zueinander ausgebildet sind.

13. Partikelfilter nach Anspruch 12,
**dadurch gekennzeichnet,**
**dass** die Vertiefungen (3) der die Einströmkanäle (8) bildenden Filterplatten (1) eine größere Fläche einnehmen als die Erhebungen (4) der die Einströmkanäle (8) bildenden Filterplatten (1).

## Claims

1. A filter plate for a particulate filter which serves to separate particulates out of an exhaust gas flow of an internal combustion engine, which filter plate is composed of a substrate material, which is permeable to gas and is coated with a sintered metal powder, and has a surface region which extends substantially in a plane,
**characterized**
**in that** the surface region (2) is provided with alternating linear depressions (3) and elevations (4), with a section (2a) of the planar surface region (2) remaining at least between two successive depressions (3) or elevations (4).

2. The filter plate as claimed in claim 1,
**characterized**
**in that** the linear depressions (3) and elevations (4) extend in a wave form over the surface region (2).

3. The filter plate as claimed in claim 1,
**characterized**
**in that** the linear depressions (3) and elevations (4) extend diagonally over the surface region (2).

4. The filter plate as claimed in claim 1, 2 or 3,
**characterized**
**in that** the linear depressions (3) and elevations (4) extend continuously over the surface region (2).

5. The filter plate as claimed in claim 1,
**characterized**
**in that** the linear depressions (3) and elevations (4) extend in a star shape over the surface region (s).

6. The filter plate as claimed in claim 1,
**characterized**
**in that** the linear depressions (3) and elevations (4) extend in a fishbone shape over the surface region (2).

7. The filter plate as claimed in one of claims 1 to 6,
**characterized**
**in that** the edge (6) of the surface region (2) lies at the same level as the linear depressions (3) or elevations (4).

8. The filter plate as claimed in one of claims 1 to 7,
**characterized**
**in that** the linear depressions (3) are provided with additional punctiform depressions (11), and the linear elevations (4) are provided with additional punctiform elevations (12).

9. The filter plate as claimed in one of claims 1 to 8,
**characterized**
**in that** a section (2a) of the planar surface region (2) remains between each of the linear depressions (3) and the adjacent linear elevation (4).

10. The filter plate as claimed in one of claims 1 to 8,
**characterized**
**in that** a linear depression (3) directly adjoins a linear elevation (4), with a section (2a) of the planar surface region (2) adjoining both the linear depression (3) and the linear elevation (4).

11. A particulate filter for separating particulates out of an exhaust gas flow of an internal combustion engine, having a plurality of filter plates (1) as claimed in one of claims 1 to 10 arranged substantially parallel to one another so as to alternately form inflow ducts (8) and outflow ducts (9) for the exhaust gas flow.

12. The particulate filter as claimed in claim 11,
**characterized**
**in that** two adjacent filter plates (1) are designed so as to be mirror-symmetrical to one another.

13. The particulate filter as claimed in claim 12, **characterized in that** the depressions (3) of the filter plates (1) which form the inflow ducts (8) take up a larger area than the elevations (4) of the filter plates (1) which form the inflow ducts (8).

## Revendications

1. Plaque filtrante destinée à un filtre à particules servant à la séparation de particules d'un écoulement de gaz d'échappement d'un moteur à combustion interne, la plaque filtrante étant réalisée en un matériau de support ou de substrat perméable aux gaz, revêtu d'une poudre métallique de frittage, et présentant une zone de surface qui s'étend sensiblement dans un plan,
**caractérisée**
**en ce que** la zone de surface (2) est pourvue de creux (3) et de proéminences (4) en forme de ligne, qui alternent mutuellement, au moins un tronçon (2a) de la zone de surface (2) plane étant conservé entre deux creux (3) ou proéminences (4) qui se succèdent.

2. Plaque filtrante selon la revendication 1,
**caractérisée en ce que** les creux (3) et proéminences (4) en forme de ligne s'étendent selon une forme ondulée sur la zone de surface (2).

3. Plaque filtrante selon la revendication 1,
**caractérisée en ce que** les creux (3) et les proéminences (4) en forme de ligne s'étendent en diagonale sur la zone de surface (2).

4. Plaque filtrante selon la revendication 1, 2 ou 3,
**caractérisée en ce que** les creux (3) et les proéminences (4) en forme de ligne s'étendent de manière continue sur la zone de surface (2).

5. Plaque filtrante selon la revendication 1,
**caractérisée en ce que** les creux (3) et les proéminences (4) en forme de ligne s'étendent en forme d'étoile sur la zone de surface (2).

6. Plaque filtrante selon la revendication 1,
**caractérisée en ce que** les creux (3) et les proéminences (4) en forme de ligne s'étendent en forme d'arête de poisson sur la zone de surface (2).

7. Plaque filtrante selon l'une des revendications 1 à 6,
**caractérisée en ce que** le bord (6) de la zone de surface (2) se situe sur une même hauteur avec les creux (3) ou les proéminences (4) en forme de ligne.

8. Plaque filtrante selon l'une des revendications 1 à 7,
**caractérisée en ce que** les creux (3) en forme de ligne sont pourvus de creux supplémentaires (11) en forme de point, et les proéminences (4) en forme de ligne sont pourvues de proéminences supplémentaires (12) en forme de point.

9. Plaque filtrante selon l'une des revendications 1 à 8,
**caractérisée en ce qu'**entre chacun des creux (3) en forme de ligne et la proéminence (4) en forme de ligne voisine, est conservé un tronçon (2a) de la zone de surface (2) plane.

10. Plaque filtrante selon l'une des revendications 1 à 8,
**caractérisée en ce qu'**un creux (3) en forme de ligne se raccorde directement à une proéminence (4) en forme de ligne, un tronçon (2a) de la zone de surface (2) plane se raccordant aussi bien au creux (3) en forme de ligne qu'à la proéminence (4) en forme de ligne.

11. Filtre à particules pour séparer des particules d'un écoulement de gaz d'échappement d'un moteur à combustion interne, comprenant plusieurs plaques filtrantes (1) selon l'une des revendications 1 à 10, qui sont agencées sensiblement de manière parallèle les unes aux autres, et forment alternativement des canaux d'entrée d'écoulement (8) et des canaux de sortie d'écoulement (9) pour l'écoulement de gaz d'échappement.

12. Filtre à particules selon la revendication 11,
**caractérisé en ce que** deux plaques filtrantes (1) voisines sont réalisées de manière symétrique inverse l'une par rapport à l'autre.

13. Filtre à particules selon la revendication 12,
**caractérisé en ce que** les creux (3) des plaques filtrantes (1) formant les canaux d'entrée d'écoulement (8) occupent une surface plus grande que les proéminences (4) des plaques filtrantes (1) formant les canaux d'entrée d'écoulement (8).
